# EUROPEAN PATENT SPECIFICATION

(11) **EP 1 803 001 B1**
(45) Date of publication and mention of the grant of the patent: **08.02.2012**
(21) Application number: 05797349.7
(22) Date of filing: 13.10.2005
(51) Int. Cl.: E21B 47/10, G01V 3/18

(54) **METHOD FOR HYDROCARBON RESERVOIR MONITORING**
VERFAHREN ZUR KOHLENWASSERSTOFF-RESERVOIR-ÜBERWACHUNG
PROCEDE DE SURVEILLANCE DE RESERVOIRS D'HYDROCARBURES

(30) Priority: 13.10.2004 NO 20044358
(43) Date of publication of application: 04.07.2007
(73) Proprietor: Geo-Contrast AS, 0250 Oslo (NO)
(72) Inventor: SJØLIE, Jan, N-1365 Blommenholm (NO); DVERGSTEN, Dag, Ø., Jr., N-0380 Oslo (NO)
(74) Representative: Schmidt, Claus Christian
(86) International application number: PCT/NO2005/000380
(87) International publication number: WO 2006/041310

(56) References cited:
- WO-A1-03/023452
- US-A- 4 641 099
- US-A- 5 825 188
- US-A1- 2004 069 487
- US-A1- 2004 108 854
- A.J. MANSURE: "Steam-Zone Electrical Characteristics for Geodiagnostic Evaluation of Steamflood Performance" SPE FORMATION EVALUATION, September 1990 (1990-09), pages 241-247, XP002569630
- A.J. MANSURE ET AL: "Field Examples of Electrical Resistivity Changes During Steamflooding" SPE FORMATION EVALUATION, March 1993 (1993-03), pages 57-64, XP002569631
- A.J. LEIGHTON ET AL: "Techniques for Mapping and Diagnosing EOR Processes" JOURNAL OF PETROLEUM TECHNOLOGY, February 1987 (1987-02), pages 129-136, XP002569632
- LOKE M.H.: 'Electrical imaging surveys for environmental and engineering studies' A PRACTICAL GUIDE TO 2-D AND 3-D SURVEYS 1997 - 2001, page 1-VI, 1-62, XP002996007
- AALTONEN J.: 'Ground Monitoring using Resistivity Measurements in Glaciated Terrains' DISSERTATION, DEPARTMENT OF CIVIL AND ENVIRONMENTAL ENGINEERING, ROYAL INSTITUTE OF TECHNOLOGY 2001, STOCKHOLM, pages 1 - 8, XP002996008

## Description

The present invention relates to the geophysical mapping of subsurface physical properties. More specifically the present invention relates to the injection of tracer fluids with the aim of monitoring the subsequent distribution and migration of the tracer within a hydrocarbon filled reservoir as a means to study the properties and fluid content of, and fluid movement within the reservoir.

The ability of a geological formation to allow the passage of fluids is dependent upon the size of the pores, their connectivity (permeability) and the properties of the fluid. The effective permeability also depends upon the relative saturations of the various fluids within the pores. Within hydrocarbon reservoirs, the permeability affects the flow path of both formation fluids and injected fluids within the reservoir. It is beneficial to know the reservoir permeabilities to optimize production strategies.

Various attempts have been made to trace fluid flow within the reservoir using tracers placed into injection wells and detected during production. US patent 6,645,769 describes such a technology. The use of these methods is limited by the fact that tracers can only be detected in the production well and at least two wells must be drilled.

Other methods propose the use of acoustic properties of injection fluids in order to trace their spatial distribution through time (US patents 4,479,204; 4,969,130; 5,586,082; 6,438,069). Such methods are limited by the fact that the acoustic properties are not always a reliable measure of the fluid composition.

The object of the present invention is to overcome the limitations of the above mentioned methods by injecting tracer fluid(s) in a hydrocarbon reservoir that can be sensed by resistivity mapping techniques as a means to study the properties and fluid content of, and fluid movement within, the reservoir. The tracer fluid(s) can be any fluid that has a conductivity different to that of the reservoir fluids.

The method is used to monitor and study the properties and/or geometrical extent of a geological formation and/or the fluids within it. The method involves the injection of fluid(s) into at least one borehole. Such injected fluid(s) will have a resistivity that contrasts with the geological formation and/or the formation fluids and/or will change the resistivity of the formation or the formation fluids. The changes that result from injection of fluid(s) will be mapped using resistivity mapping techniques. Several existing resistivity mapping techniques are available for such a purpose. In the final step, the data are interpreted.

General resistivity mapping techniques are described for instance by US patents 4,617,518, 4,633,182; 5,770,945; 6,603,313; 6,842,006 and 6,717,411. Time-lapse remote resistivity studies have previously been used for environmental and engineering studies 8Loke, M.H. 1999: Electrical imaging surveys for environmental and engineering studies). The mapping of the injected conductive/resistive solutions has been used in estimation of ground water flow patterns (Aaltonen, J. 2001: Ground monitoring using resistivity measurements in glaciated terrains.; Park, S. 1998: Fluid migration in the vadose zone from 3D inversion of resistivity monitoring data.; US patent 5,825,188). A method for combined surface and wellbore resistively mapping for reservoir monitoring purposes is described by US patent 6,739,165. An apparatus to time-lapse resistivity monitoring is described in PCT patent WO 03/023452. A more general description of remote resistivity surveys suitable for mapping of an injected conductive/resistive fluid is given by Kaufman and Hoekstra (Kaufman A.A., and Hoekstra, P., 2001: Electromagnetic soundings. Elsevier).

The techniques used to map the resistivity of the formation, formation fluids and/or injected fluid(s) may be remote, direct or a combination of the two. They may be applied in either the frequency domain or time domain. Methods may include, but are not restricted to, performing resistivity mapping using controlled source electromagnetic, magnetotelluric, galvanic methods or any combination of these. The data can be collected by airborne survey, from land-based measurements and/or marine-based measurements. Data collection can also be undertaken within the subsurface using detectors placed within one or more boreholes. The source of the electromagnetic, electric or magnetic field may be airborne, land or marine-based or placed within the borehole. The borehole and/or well casing may also be used as a source, or part of a source. Any combination of source and receiver location is potentially possible.

The tracer is an injection fluid with an electrical resistivity that contrasts with the formation and/or formation fluids. The injection fluid(s) may also have the capacity to change the resistivity of the formation or formation fluids by biological, chemical or physical means. The resistivity of the injected fluid(s) may be changed through time to enable the tracing of fluid movement with the formation.

The injected fluid distribution at a certain time or at time intervals is detected and mapped using remote and/or direct resistivity mapping techniques well known in geophysics. The electrical resistivity is a parameter which is highly dependent on the fluid type. Resistivity mapping has been used for hydrocarbon prospecting as described in US patents 4,617,518; 4,633,182; 6,603,313; 5,770,945 ; 6,842,006 and 6,717,411. Its use for reservoir monitoring purposes is described in US patent 6,739,165.

The method can be used once at least one borehole has been drilled into the formation. The method may include making resistivity observations on the formation prior to injection, although this is not essential. In addition the injected fluid(s) or mixture of injected and formation fluids can be ignited. By mapping resistivity once or at selected time intervals during and/or after injection, the flow path of the injected fluid(s) and consequently the permeability structure and fluid content of the formation can be determined. The resistivity or other properties of the injected tracer fluid(s) may be ' varied with time.

The procedure of monitoring and performing resistivity mapping can involve processing, migration, modeling and/or inversion of the data. Time lapse data can be processed by joint-inversion and/or joint-processing of the resistivity data collected at different time intervals.

Seismic, gravity, magnetic and other geophysical data, in addition to geological data, production data, reservoir modeling and reservoir simulation may also be used in any combination with resistivity measurements to map the distribution of the injected fluid(s) or its alteration effects. This includes using data before, during and/or after resistivity mapping.

It is well known that seismic surveys are poor at detecting fluid properties and distribution, whilst these properties are better detected by resistivity surveys. The tracing approach according to the present invention thus provides significant advantages over existing methods.

Applications of the invention include:
1) The monitoring of fluid distribution within a hydrocarbon reservoir, prior to and during production.
2) The estimation of the fluid content (including saturation) porosity and permeability structure of a hydrocarbon filled reservoir or reservoir analogue.

### Example

An example of a typical application of the invention would be in hydrocarbon production for enhanced recovery purposes. In this case the injection fluid could be, but is not limited to, solutions of hydrochloric acid (HCl) and/or sodium-chloride (NaCl) in water which are highly conductive. The injection of such tracer fluid(s) into a reservoir will cause a high resistivity contrast with respect to surrounding formations and the hydrocarbons within the reservoir. Such resistivity contrasts can be identified by using suitable, including existing, resistivity mapping methods. For example it is possible to use controlled source electromagnetic sounding where a horizontal dipole antenna and a set of electromagnetic field receivers are placed on the seafloor or according to any other relevant acquisition configuration configuration. Similarly, the resistivity contrast can be identified by placing one or more dipole antennae and/or one or more receivers within wells. There is a number of different configurations that have the potential to identify the resistivity contrasts and the idea is flexible to different set-ups. By studying the propagation of the tracer fluid(s), it is possible to estimate the parameters of the reservoir, including movements of hydrocarbons, fluid content, permeability, porosity and more. There may be additional benefits of injecting tracer fluid(s) such as increased recovery by improved secondary permeability and porosity.

US 2004/0108854 A1 is considered to be the closest prior art and discloses a method of marine-based subsurface conductivity imaging.

## Claims

1. Method for monitoring data from marine-based measurements of one or more properties of an hydrocarbon reservoir containing at least one borehole **characterized in that** the method comprises the steps of:
injecting into at least one borehole a tracer fluid which has resistivity different from the resistivity of the formation and/or formation fluid(s) and/or is able to change the resistivity of the formation and/or formation fluid(s); monitoring the altered resistivity of the formation and/or formation fluid(s) caused by the injected tracer fluid(s) by applying controlled source electromagnetic (CSEM) survey methods; and interpreting the data.

2. The method according to claim 1, wherein the monitoring is performed by remote and/or direct methods.

3. The method according to claims 1 to 2, wherein the monitoring is performed at repeated time intervals.

4. The method according to any of claims 1 to 3, wherein the method further comprises determining the geometrical extent of the injected and/or formational fluid.

5. The method according to any of claims 1 to 4, wherein the injected fluid has chemical and/or physical and/or biological properties, which enables it to change the resistivity of the formation and/or formation fluid(s).

6. The method according to any of claims 1 to 5, wherein the monitoring by using controlled source electromagnetic methods includes airborne, land, and marine cases, including receivers and/or source placed inside or outside one or more boreholes.

7. The method according to any of claims 1 to 5, wherein the monitoring comprises using magnetotelluric methods inside or outside a borehole, on land, in the air or at sea.

8. The method according to any of claims 1 to 5, wherein the monitoring comprises using galvanic methods inside or outside a borehole, on land, in the air or at sea.

9. The method according to any of claims 1 to 8, wherein the monitoring of injected fluid comprises joint processing and/or inversion of resistivity mapping data sets collected at different time intervals.

10. The method according to any of claims 1-9, wherein the interpretation is performed by using frequency domain method.

11. The method according to any of claims 1-10, wherein the interpretation is performed by using time domain method.

12. The method according to claim 1 or claim 11, wherein seismic survey data and/or gravity survey data and/or magnetic survey data are used in addition to resistivity data during the process of monitoring the injected fluid.

13. The method according to any of claims 1 to 12, wherein the borehole and/or its casing are used as a source and/or receiver or a part of a source and/or receiver for resistivity measurements.

14. The method according to any of claims 1 to 13, wherein the resistivity and/or other properties of injection fluid are varied with time.

15. The method according to any of claims 1 to 14, wherein geophysical data and/or geological data and/or production data and/or reservoir modeling and/or reservoir simulation is used in the interpretation

## Patentansprüche

1. Verfahren zur Überwachung von Daten von marinebasierten Messungen von einer oder mehreren Eigenschaften eines Kohlenwasserstoffreservoirs mit zumindest einem Bohrloch, **dadurch gekennzeichnet, dass** das Verfahren folgende Schritte umfasst:
einspritzen in mindestens ein Bohrloch eines Indikatorfluid, das einen anderen Widerstand als der der Formation und/oder des Formationsfluids/der Formationsfluide aufweist und/oder den Widerstand der Formation und/oder des Formationsfluids/der Formationsfluide ändern kann; überwachen des durch das eingespritzte Indikatorfluid/die eingespritzten Indikatorfluide geänderten Widerstands der Formation und/oder des Formationsfluids/der Formationsfluide durch Anwenden von CSEM-Messverfahren (Eng: controlled source electromagnetic); und Auswerten der Daten.

2. Verfahren nach Anspruch 1, wobei die Überwachung durch Fern- und/oder Direktverfahren vorgenommen wird.

3. Verfahren nach Anspruch 1 bis 2, wobei die Überwachung in wiederholten Zeitintervallen vorgenommen wird.

4. Verfahren nach Anspruch 1 bis 3, wobei das Verfahren weiter Bestimmen des geometrischen Umfang des eingespritzten Fluids und/oder Formationsfluids umfasst.

5. Verfahren nach Anspruch 1 bis 4, wobei das eingespritzte Fluid chemische und/oder physikalische und/oder biologische Eigenschaften aufweist, wodurch es den Widerstand der Formation und/oder des Formationsfluids/der Formationsfluide ändern kann.

6. Verfahren nach Anspruch 1 bis 5, wobei die Überwachung durch CSEM-Verfahren Luft-, Land- und Meeresfälle samt Empfänger und/oder Quelle innerhalb oder außerhalb eines oder mehrerer Bohrlöcher umfasst.

7. Verfahren nach irgendeinem der Ansprüche 1 bis 5, wobei die Überwachung Anwendung von magnetotellurischen Verfahren innerhalb oder außerhalb eines Bohrlochs zu Land, in der Luft oder auf dem Meer umfasst.

8. Verfahren nach irgendeinem der Ansprüche 1 bis 5, wobei die Überwachung Anwendung von galvanischen Verfahren innerhalb oder außerhalb eines Bohrlochs zu Land, in der Luft oder auf dem Meer umfasst.

9. Verfahren nach irgendeinem der Ansprüche 1 bis 8, wobei die Überwachung des eingespritzten Fluids gemeinsames Behandeln und/oder Inversion von Widerstandsermittlungsdatensätzen, die in verschiedenen Zeitintervallen eingesammelt worden sind, umfasst.

10. Verfahren nach irgendeinem der Ansprüche 1 bis 9, wobei die Auswertung durch Frequenzbereichverfahren vorgenommen wird.

11. Verfahren nach irgendeinem der Ansprüche 1 bis 10, wobei die Auswertung durch Zeitbereichverfahren vorgenommen wird.

12. Verfahren nach Anspruch 1 oder 11, wobei seismische Aufnahmedaten und/oder Gravitationsaufnahmedaten und/oder magnetische Aufnahmedaten zusätzlich zu Widerstandsdaten während des Prozesses der Überwachung des eingespritzten Fluids verwendet werden.

13. Verfahren nach irgendeinem der Ansprüche 1 bis 12, wobei das Bohrloch und/oder sein Bohrrohr als Quelle und/oder Empfänger oder ein Teil einer Quelle und/oder eines Empfänger für Widerstandsmessungen verwendet werden.

14. Verfahren nach irgendeinem der Ansprüche 1 bis 13, wobei der Widerstand und/oder andere Eigenschaften des Einspritzfluids über Zeit variiert werden.

15. Verfahren nach irgendeinem der Ansprüche 1 bis 14, wobei geophysikalische Daten und/oder geologische Daten und/oder Produktionsdaten und/oder Reservoirmodellieren und/oder Reservoirsimulieren in der Auswertung verwendet werden.

## Revendications

1. Procédé de surveillance de données issues de mesures marines d'une ou plusieurs propriétés d'un réservoir d'hydrocarbure comprenant au moins un forage, **caractérisé en ce que** le procédé comprend les étapes suivantes:
l'injection dans au moins un forage d'un fluide traceur qui présente une résistivité différente de la résistivité de la formation et/ou du fluide ou des fluides de la formation et/ou est apte à modifier la résistivité de la formation et/ou du fluide ou des fluides de la formation; la surveillance de la résistivité modifiée de la formation et/ou du fluide ou des fluides de la formation due au(x) fluide(s) traceur(s) injecté(s) en appliquant les méthodes de surveillance de source contrôlée en électromagnétique, (CSEM); et l'interprétation des données.

2. Procédé selon la revendication 1, dans lequel la surveillance est réalisée par des méthodes à distance et/ou directes.

3. Procédé selon les revendications 1 à 2, dans lequel la surveillance est effectuée à intervalles de temps répétés.

4. Procédé selon l'une quelconque des revendications 1 à 3, dans lequel le procédé comprend en outre la détermination de l'étendue géométrique du fluide injecté et/ou du fluide de la formation.

5. Procédé selon l'une quelconque des revendications 1 à 4, dans lequel le fluide injecté présente des propriétés chimiques et/ou physiques et/ou biologiques, permettant audit fluide de modifier la résistivité de la formation et/ou du fluide ou des fluides de la formation.

6. Procédé selon l'une quelconque des revendications 1 à 5, dans lequel la surveillance en utilisant les méthodes de surveillance de source contrôlée en électromagnétique comprend des cas aéroportés, sur terre ou en mer, contenant les récepteurs et/ou une source placée à l'intérieur ou à l'extérieur d'un ou de plusieurs forages.

7. Procédé selon l'une quelconque des revendications 1 à 5, dans lequel la surveillance comprend l'utilisation des méthodes magnétotelluriques à l'intérieur ou l'extérieur d'un forage, sur terre, dans les airs ou en mer.

8. Procédé selon l'une quelconque des revendications 1 à 5, dans lequel la surveillance comprend l'utilisation des méthodes galvaniques à l'intérieur ou l'extérieur d'un forage, sur terre, dans les airs ou en mer.

9. Procédé selon l'une quelconque des revendications 1 à 8, dans lequel la surveillance de fluide injecté comprend un traitement commun et/ou une inversion des ensembles de données de cartographie de résistivité saisis à différents intervalles de temps.

10. Procédé selon l'une quelconque des revendications 1 à 9, dans lequel l'interprétation est effectuée en utilisant la méthode du domaine fréquentiel.

11. Procédé selon l'une quelconque des revendications 1 à 10, dans lequel l'interprétation est effectuée en utilisant la méthode du domaine temporel.

12. Procédé selon la revendication 1 ou la revendication 11, dans lequel les données sismiques de surveillance et/ou les données de gravimétrie de surveillance et/ou les données magnétiques de surveillance sont utilisées en plus de données de résistivité au cours du processus de surveillance du fluide injecté

13. Procédé selon l'une quelconque des revendications 1 à 12, dans lequel le forage et/ou son tubage sont utilisés comme une source et/ou un récepteur ou une partie d'une source et/ou d'un récepteur pour des mesures de résistivité.

14. Procédé selon l'une quelconque des revendications 1 à 13, dans lequel la résistivité et/ou d'autres propriétés de fluide d'injection sont variées avec le temps.

15. Procédé selon l'une quelconque des revendications 1 à 14, dans lequel les données géophysiques et/ou les données géologiques et/ou les données de production et/ou la modélisation de réservoir et/ou la simulation de réservoir sont utilisées dans l'interprétation.
